# EUROPEAN PATENT SPECIFICATION

(11) **EP 3 928 847 B1**
(45) Date of publication and mention of the grant of the patent: **16.11.2022**
(21) Application number: 20181544.6
(22) Date of filing: 23.06.2020
(51) Int. Cl.: A63H 33/00, C09K 3/00

(54) **ANTIMICROBIAL FLEXIBLE PLAY COMPOSITION**
ANTIMIKROBIELLE FLEXIBLE SPIELZUSAMMENSETZUNG
COMPOSITION LUDIQUE ANTIMICROBIENNE FLEXIBLE

(43) Date of publication of application: 29.12.2021
(73) Proprietor: Canal Toys España Distribución S.L., 03430 Onil - Alicante (ES); Jun Hao Toys Company Limited, Chaiwan - Hong Kong (CN)
(72) Inventor: SANTANA CAPARRÓS, Jose Antonio, 03560 El Campello (Alicante) (ES); HO, Lo Yiu Eunice, CHAIWAN (HK)
(74) Representative: Carlos Hernando, Borja

(56) References cited:
- WO-A1-2016/133325
- CA-A1- 2 016 248
- CN-A- 101 525 459
- CN-A- 101 824 167
- CN-A- 107 304 296

## Description

### TECHNICAL FIELD OF THE INVENTION

The present invention is directed to a flexible play material's composition, such as playing dough and/or gel-like playing material having antimicrobial properties which provides improved safety requirements and non toxicity for young children and infants playing with such material.

### BACKGROUND OF THE INVENTION

Choosing safe toys for young children and infants is a major concern for parents. Safety concerns arise primarily in relation to infections caused by virus and bacteria.

As such, toys can be an especially good harboring ground for infections and contagious diseases since they are often used multiple times a day, and by many children at a time. Children coughing, sneezing, or putting their hand to their mouth on these products are all potential ways for germs to quickly spread from toys to children. Toys and children's play equipment is therefore linked to transmission of viruses during outbreaks. In environments such as nurseries, daycare, hospitals or surgeries where toys are shared, regular cleaning and/or disinfection of the items is necessary in order to helping to limit the spread of infection.

However the measures of regular cleaning and/or disinfecting toys may not be sufficient for keeping young children safe.

Therefore, playing dough, plasticine and any other playing material are especially susceptible for holding germs and contributing to transmission thereof between children, as these materials are in general containing large amounts of water, thereby providing an exceptionally good environment for the growth of germs. In addition, playing with such materials involves hand working through kneading and hand modeling.

In addition and as regards safety of use for children of such materials and compositions, it is as well of concern the possible exposure of children to toxic ingredients present in such products, specially, because of a number of factors, including a higher metabolic rate and greater surface area to weight ratio in children than adults, immaturity of organ systems and rapid growth and development of organs and tissues such as bone and brain. Children's exposure to toxic materials is also increased because of children's hand to mouth activity creating a pathway for toxic chemicals in toys and other products to enter their body. Ingredients present in such compositions, for example, borax and/or preservatives may cause skin irritation, allergic reactions, etc.

The state of the art already discloses several plasticine or clay compositions containing an antimicrobial agent.

For example, CN101824167 relates to an antibacterial plasticine, comprising chitosan quaternary ammonium salt 5.0-7.0; nano-rectorite powder 8.0-10.0; refined flour 10.0-15.0; sweet potato FD powder 10.0-12.0; glutinous rice powder 10.0-15.0; carboxymethyl cellulose 1.0-2.0; hydroxyethyl cellulose 1.0-2.0; natural rubber 10.0-15.0; butadiene rubber 10.0-15.0; polyvinyl alcohol 0.5-0.8; petrolatum 1.0-2.0; white oil 0.5 -0.8; glycerin 0.8-1.2; anti-aging agent 0.5-0.6 and water.

CN104492094 discloses a non-toxic plasticine and a preparation method thereof. The non-toxic plasticine is prepared from an edible flour material and water which are used as a base material, wherein the non-toxic plasticine contains collagen and nanogold sol, is excellent in elasticity, not easy to crack and environmental-friendly.

WO2013141648 relates to artificial clay for crafts and a manufacturing method therefor and, more specifically, to an artificial clay composition for crafts which does not harden even when used for lengthy periods, can maintain the original shape for lengthy periods without being sticky, is environmentally and hygienically safe, and can float on water. The artificial clay composition for crafts herein described comprises 10-50 parts by weight of a thermoplastic elastomer for elasticity control and plasticization, 1-15 parts by weight of a lubricant, 5-40 parts by weight of an internal filler, and 5-40 parts by weight of porous or hollow fine powder, based on 100 parts by weight of polysiloxane compound-based silicone gum. An antibacterial agent for inhibiting bacterial infection and mold development can be used. The antimicrobial agent may include 0.1 to 5 parts by weight based on 100 parts by weight of the silicone gum, and may be adjusted to an appropriate amount according to the type and need of the antimicrobial agent. Inorganic antimicrobial agents, such as metal oxides, nanosilver, zeolite and the like. Organic antimicrobial agents include imidazole-based, carbendazim crab, nitrofurazone-based, etc.. This patent application does however report problems of elution, heat resistance, and short-term antimicrobial durability.

WO2016133325 describes an artificial clay composition which may further contain an antimicrobial agent as necessary. As the antimicrobial agent, a natural antimicrobial substance may be preferably used. The natural antimicrobial material may include, for example, silver products including silver ions and silver nano; Grapefruit extract; Garlic extract containing allicin; Green tea extract, etc., and one or more selected from the group consisting of these may be included in the composition. CN 107 304 296 A discloses non-toxic antibacterial plasticine which comprises the following components in parts by mass: 25-50 parts of collagen, 5-10 parts of a nanogold sol, 25-50 parts of water, 10-50 parts of flour, 3-10 parts of table salt, 5-10 parts of oil, 5-10 parts of maltose, 1-9 parts of pigments, 5-10 parts of cordate houttuynia (plant extract), 5-10 parts of carpet bugle (plant), 5-10 parts of hemsleya amabilis (plant), 5-10 parts of polygonum cuspidatum (plant), 5-10 parts of schizonepeta and 5-10 parts of chufa (yellow nutsedge).

While these prior art inventions address the problem of providing antimicrobial properties to the mentioned products they failed to address at the same time the problem of providing less chemical toxicity to the products, thereby increasing safety of use for young children and infants.

The present invention is faced with the problem of providing a flexible play composition, such as playing dough and/or gel-like playing material with improved antimicrobial properties and increased safety of use for young children and infants due to reduced presence of chemical agents in the composition, such as preservatives which may cause skin irritation and/or any other harmful effect to the children.

### BRIEF DESCRIPTION OF THE INVENTION

The following disclosure is presented to provide an illustration of the general principles of the present invention and is not meant to limit, in any way, the inventive concepts contained herein.

All terms defined herein should be afforded their broadest possible interpretation, including any implied meanings.

It should be stated that, as recited herein, the singular forms "a", "an", and "the" include the plural referents unless otherwise stated. Additionally, the terms "comprises" and "comprising" when used herein specify that certain features are present in that embodiment, however, this phrase should not be interpreted to preclude the presence or addition of additional steps, operations, features and/or components.

The present invention is directed to a flexible water based play material's composition. In the context of the present invention the term "flexible play composition" or "flexible play material's composition" as used herein refers to a play material composition having a high degree of elasticity, flexibility, plasticity and malleability which can be hand manipulated and shaped to configure play items and handicrafts. This flexible play composition is suitable for being used by young children and infants.

It is therefore an object of the present invention a flexible water based play composition having antimicrobial properties comprising a thickener, preservatives, water and a combination of antimicrobial agents selected from the group consisting of silver ions and benzalkonium chloride.

It is a further object of the present invention a flexible water based play composition having antimicrobial properties according to preceding paragraph, characterized in that silver ions and benzalkonium chloride is present in the composition in an amount of from 0,15 - 1,5% by weight with respect to the total weight of the composition.

It is a further object of the present invention a flexible water based play composition having antimicrobial properties according to preceding paragraphs, characterized in that silver ions are present in the composition in an amount of from 0.15 - 1.0% by weight with respect to the total weight of the composition.

It is a further object of the present invention a flexible water based play composition having antimicrobial properties according to preceding paragraphs, characterized in that benzalkonium chloride is present in the composition in an amount of from 0,015 - 0,06% by weight with respect to the total weight of the composition.

It is a further object of the present invention a flexible water based play composition having antimicrobial properties according to preceding paragraphs, characterized in that the thickener is guar gum or derivatives thereof selected from the group consisting of : hydroxypropyl guar (HPG), carboxymethyl guar (CMG) and carboxymethyl hydroxypropyl guar (Carboxymethyl 2-Hydroxypropyl Ether) (CMHPG).

It is a further object of the present invention a flexible water based play composition having antimicrobial properties according to preceding paragraph, characterized in that guar gum or derivatives thereof is present in the composition in an amount of from 1 to 2% by weight with respect to the total weight of the composition.

It is a further object of the present invention a flexible water based play composition having antimicrobial properties according to preceding paragraphs, characterized in that the thickener is selected from the group consisting of wheat flour, cornstarch polyvinyl alcohol and mixtures thereof.

It is a further object of the present invention a flexible water based play composition having antimicrobial properties according to preceding paragraph, characterized in that wheat flour is present in the composition in an amount of from 40 to 80% by weight with respect to the total weight of the composition.

It is a further object of the present invention a flexible water based play composition having antimicrobial properties according to preceding paragraphs, characterized in that polyvinyl alcohol is present in the composition in an amount of from 1 to 10% by weight with respect to the total weight of the composition.

It is a further object of the present invention a flexible water based play composition having antimicrobial properties according to preceding paragraphs, additionally comprising borax in an amount of from 0,05 to 0,15 by weight with respect to the total weight of the composition.

It is a further object of the present invention a flexible water based play composition having antimicrobial properties according to preceding paragraphs, characterized in that the preservatives present in the composition are selected from the group consisting of: ethylene glycol monophenyl ether, 2-phenoxyethanol, iodopropynyl butylcarbamate, DMDMH and mixtures thereof.

It is a further object of the present invention a flexible water based play composition having antimicrobial properties according to preceding paragraphs, characterized in that the preservatives are present in the composition in an amount of from 0,01 - 0,10% by weight with respect to the total weight of the composition.

It is a further object of the present invention a flexible water based play composition having antimicrobial properties according to preceding paragraphs, characterized in that water is present in the composition in an amount of from 10 to 90% by weight with respect to the total weight of the composition.

It is a further object of the present invention a flexible water based play composition having antimicrobial properties according to preceding paragraphs, additionally comprising humectants, moisturizers, skin conditioning agents, pigments, colorants, dyes and/or fragrances.

It is a further object of the present invention a flexible water based play composition having antimicrobial properties according to preceding paragraphs, comprising (in % by weight with respect to the total weight of the composition):

| **Ingredients** | **% by weight** |
|---|---|
| Hydroxypropyl Guar | 1,700 |
| Sodium Borate (Na₂B₄O₇) | 0,090 |
| Propylene glycol | 9,500 |
| lodopropynyl Butylcarbamate | 0,060 |
| 2-Phenoxyethanol | 0,200 |
| Diazolidinyl Urea | 0,070 |
| Silver Solution - C | 1,000 |
| Benzalkonium chloride | 0,015 |
| FD&C Blue O Powder | 0,035 |
| Aqua | 87,330 |
| | **100,000** |

It is a further object of the present invention a flexible water based play composition having antimicrobial properties according to preceding paragraphs, comprising (in % by weight with respect to the total weight of the composition):

| **Ingredients** | **% by weight** |
|---|---|
| Whole Wheat Flour | 60,00 |
| Polyvinyl alcohol | 3,00 |
| Glycerol | 8,50 |
| White mineral oil | 9,00 |
| Ethylene glycol monophenyl ether | 0,60 |
| lodopropynyl Butylcarbamate | 0,09 |
| Octane-1,2-diol | 0,30 |
| Pentylene glycol | 0,30 |
| Silver Solution - C | 0,50 |
| Benzalkonium chloride | 0,06 |
| Aqua | 17,65 |
| | **100,00** |

### DETAILED DESCRIPTION OF THE INVENTION

Play compositions of different types are used as handicrafts for children or even for the development of their manual skills at school. There exist an increasing number of different compositions which all show to be flexible allowing easy hand workability. Amongst them, water based compositions comprising natural fillers are most likely preferred. The present invention is therefore directed to water based compositions of the type comprising playdough and gel-like compositions, commercially known as "slime", containing natural fillers and binders, such as starch based binders, wax, flour, and other natural gel like substances, such as guar gum.

Regular playdough is composed of water, a starch-based binder, a retrogradation inhibitor, salt, lubricant, surfactant, preservative, hardener, humectant, fragrance, and color. A petroleum additive gives the compound a smooth feel, and borax prevents mold from developing.

Gel based play compositions, such as "slime" are distinct play materials composed of a cross-linked polymer which are typically made by combining polyvinyl alcohol solutions or guar gum with borate ions. These compositions are in the form of liquids and have a variable viscosity. The molecular structure of slime is the factor responsible for its interesting behavior. Toy slime is typically composed of tangled, long-chain polymer molecules. These polymer molecules can be thought of as spaghetti strands. When put together on a plate, the strands are mixed together making a tangled mess. If the strands are rubbed together, they line up and become smoother. This motion gives the mass its slimy, slippery feel.

The most common ingredients used in the production of toy slime are water, polymeric materials, gelling agents, colorants, fillers, and preservatives.

The most abundant material in slime is water, typically making up over 70% of the formula. Generally, specially treated deionized water is used. Water is a diluent that gives the slime its liquid consistency.

The polymeric materials are responsible for the important characteristics of slime. The most commonly used material is polyvinyl alcohol (PVA). PVA is a long chain polymer that has a backbone of carbon molecules with numerous hydroxyl (OH) groups attached. In a typical slime formula, about 3% PVA is needed. Another similar polymer is polyvinylacetate (PVAC). This has a slightly different chemical makeup but it behaves in the same way as PVA when a gelling agent is added. Certain "natural" polymers can also be used to produce slime. Common examples include guar gum, which is derived from the bean of the guar plant, and methylcellulose, which comes from plants, and cornstarch.

While the polymeric materials give slime its substance, a gelling agent is needed to give it the desired liquid behavior. In classic slime formulations, sodium borate (Borax) or sodium tetraborate is used. When dissolved in water, sodium borate dissociates into sodium ions and borate ions. If a polymer is present like PVA, the borate ions interact with the polymer chains and form weak ionic bonds that make the solution thicker. These bonds also give the ability to stretch when a force is applied. Typically, sodium borate makes up about 1% of the final product. The ratio of the polymer to the gelling agent is one factor in determining the consistency of the slime.

A variety of additional ingredients are added to slime products to improve color and odor. In general, the polymeric solutions used in slime manufacturing are colorless. Therefore, a variety of dyes are added to give the product color. To improve the odor of slime, a fragrance is often added. Fragrances are made up of volatile oil materials. Additionally, various acids or bases may be included to control the pH of the slime.

As mentioned above both of playdough and gel-like compositions comprise preservatives and salts, which have been shown to be a potential cause for irritant and allergic contact dermatoses in children.

The present invention refers to a flexible play composition, such as playing dough and/or gel-like playing material with improved antimicrobial properties and increased safety of use for young children and infants, in that the contents of preservatives are reduced with respect to regular playdough and slime compositions. In order to achieve the desired effects, the water based play compositions of the present invention comprise a combination of an antimicrobial agent, such as silver ions and a biocide agent, such as benzalkonium chloride.

Ionic silver is increasingly being recognized for its broad-spectrum antimicrobial qualities and the fact that it presents virtually none of the side-effects related to antibiotics. Ionic silver is entirely non-toxic to the body. Ionic silver is also a powerful tissue-healing agent, so much so that it has been used topically for decades in burn centers and currently represents one of the fastest growing sectors - if not the fastest growing sector - in wound care today. Ionic silver to be used for the purpose of the present invention may be in the form of silver ions, silver nano particles and/or colloidal solutions containing silver ions. These ingredients are commercially available, for example in the form of colloidal solutions from Jinda Nanotechnology (Xiamen) Co. LTD.

Benzalkonium chlorides (BACs) are chemicals with widespread applications due to their broad-spectrum antimicrobial properties against bacteria, fungi, and viruses. Benzalkonium chlorides, also known as alkyl dimethyl benzyl ammonium chlorides, alkyl dimethyl (phenylmethyl) quaternary ammonium chlorides, ammonium alkyl dimethyl (phenylmethyl) chlorides, or ammonium alkyl dimethyl benzyl chlorides, are a class of quaternary ammonium compounds marketed as superior disinfectant and antiseptics. BACs are commercially available in the form of solutions from, for example, Shanghai Shengxuan Biological Technology Co., LTD.

By incorporating these specific antimicrobial agents into the play composition according to the present invention it has been surprisingly found that at least 80% of germs present in the surface of the material are killed with respect to regular compositions, more preferably, at least 99% of germs are killed as shown in the testing according to European Standard BS EN 1276:2019 of example 4, thus substantially increasing the safety of use of the play compositions by young children over commercially available similar play compositions, the latter incorporating only preservatives into their mixtures and thus achieving only a bacteriostatic effect in contrast to the bactericidal effect of the claimed compositions.

In addition it has been found that by incorporating such combination of antimicrobial agents in the compositions of the present invention, the content of preservatives in the composition, when compared with regular compositions can be substantially reduced, up to at least 50%, .

Both antimicrobial properties and reduced toxicity due to a reduced amount of preservatives in the composition contribute to an increased safety of use for children and infants.

The antimicrobial effects achieved in the play compositions of the present invention are shown to be present for at least 24 months.

In the flexible play compositions of the present invention, the combination of antimicrobial agents, silver ions and benzalkonium chloride is present in an amount of from 0.15 - 1.5% by weight, more preferably, from 0.5 - 1.02 % by weight with respect to the total weight of the composition.

In particular, silver ions are present in the composition in an amount of from 0.15 - 1.0% by weight, more preferably, from 0.5 to 1.0% by weight with respect to the total weight of the composition.

In particular, benzalkonium chloride is present in the composition in an amount of from 0.015 to 0.06% by weight with respect to the total weight of the composition.

In a preferred embodiment of the present invention, the water based play composition of the present invention can be a gel-like composition where the polymeric material and thickener present in the composition is preferably, guar gum or derivatives thereof.

Guar gum is a natural polymer with a molecular weight of about 220,000 g/mole, is made from the ground endosperms of *Cyamopsis tetragonolobus,* a legume cultivated in India as livestock feed. Guar gum has 5-8 times the thickening power of starch and is commonly used as a binding or thickening agent in foods and cosmetics.

Guar gum and derivatives thereof used as polymeric material (thickener) of the gel based play composition of the present invention can be selected from: hydroxypropyl guar (HPG), carboxymethyl guar (CMG) and carboxymethyl hydroxypropyl guar (Carboxymethyl 2-Hydroxypropyl Ether) (CMHPG). Hydroxypropyl guar and methylcellulose used for the compositions of the present invention are available for example from Shanghai Panhua Industrial Co., LTD.

Guar gum is present in the composition in an amount of from 1 to 2% by weight, more preferably, 1.7% by weight with respect to the total weight of the composition.

The water based play composition of the present invention can alternatively be a playdough composition, where the thickener present in the composition is preferably, flour, such as wheat flour and/or cornstarch. A preferred embodiment contemplates incorporating wheat flour or cornstarch in addition to polyvinyl alcohol as thickeners of the composition.

Wheat flour or cornstarch is present in the composition in an amount of from 40 to 80% by weight, preferably 60% by weight with respect to the total weight of the composition. Polyvinyl alcohol is present in the composition in an amount of from 1 to 10% by weight, preferably 3% by weight with respect to the total weight of the composition. Wheat flour, cornstarch and polyvinyl alcohol used for the compositions of the present invention are available for example from Suzhou Yougao Fine Chemical Co. LTD and Kuraray International Trade Shanghai Co., LTD

Further ingredients present in the compositions of the present invention are for example, sodium borate (Borax), sodium tetraborate and/or boric acid, which are used as gelling and cross-linking ingredients. When guar gum is present in the composition, it forms complexes with the borate ion, B(OH)4-, due to the interaction of the borate ions with 1,2-diol groupings in the long-chain polyalcohol.

In addition to forming complexes with the borate ion, the interaction of long-chain polyalcohols, such as guar gum, with the borate ion leads to cross-linking of different polymer chains, or sometimes part of the same chain, in such a way that a three-dimensional network of connected chains is formed. When the concentration of cross-linked chains is high, solvent is immobilized within the network and a semisolid gel results. Because the borate ion can bond with four alcohol groups it is particularly effective in creating three-dimensional gel networks with guar gum.

Borax and boric acid used for the composition of the present invention are available for example from Shanghai Yixin Chemical Co. LTD.

As already mentioned, exposure to excessive levels of boron (present in borax) may be harmful for the children's health, causing irritation, diarrhea, vomiting and cramps. Although most of the slime manufacturers maintain the boron content in the composition below the recommended 300mg/kg level, it is still desirable to lower the content of borax as much as possible in order to prevent any undesirable effect associated with it.

Contrary to commonly known slime formulations containing up to 2% by weight borax, in the compositions of the present invention borax is present in an amount of 0.05 to 0.15% by weight with respect to the total weight of the composition. Borax is most preferably present in the composition in an amount of 0.09% by weight with respect to the total weight of the composition.

While borax effects a cross-linking action of the polymer ingredients in the composition it also exerts an anti-fungal activity. Thus the required amount of borax in the composition when the combination of antimicrobial agents, silver ions and benzalkonium chloride are present, is reduced by at least by 5%, more preferably between 5 - 10%.

The composition of the present invention can contain other additives, such as: moisturizers, skin conditioning agents, fixatives and preservatives.

Suitable moisturizers which can be used in the compositions of the present invention can be selected from the group consisting of: glycerol, propylene glycol white mineral oil, octane-1,2-diol, glycerium, etc. These ingredients are available for example from Shanghai King Chemical Co. LTD, Dongguan Qifeng Chemical Co. LTD, Shanghai Eba Chemical Raw Materials Co. LTD and Guangzhou Noyassure Biological Technology Co. LTD.

Suitable skin conditioning agents which can be used in the compositions of the present invention can be selected from the group consisting of: pentylene glycol, etc. These ingredients are available for example from Sanmenxia Xinxinyuan Technology Co. LTD.

Suitable preservatives and fixatives which can be used in the compositions of the present invention can be selected from the group consisting of: ethylene glycol monophenyl ether, 2-phenoxyethanol, iodopropynyl butylcarbamate, DMDMH etc. These ingredients are available for example from Guangzhou Noyassure Biological Technology Co. LTD.

As said before, it has been surprisingly found that by addition of the combination of silver ions and benzalkonium chloride in the compositions according to the present invention, the amount of preservatives is substantially reduced with respect to regular play dough and/or gel-like playing compositions such as the so called slime products.

Contrary to commonly known water based play formulations which can contain up to 5% by weight preservatives, in the compositions of the present invention the amount of preservatives is present from 0,01 to 0,10% by weight with respect to the total weight of the composition.

Thus the required amount of preservatives in the composition when the combination of antimicrobial agents, silver ions and benzalkonium chloride is present in the composition is reduced by at least by 50%.

The compositions according to the present invention may further contain other additives such as, fragrances, pigments, colorants and/or dyes, such as yellow iron oxide, black iron oxide, brown iron oxide, and red iron oxide. The formulation may further include luminescent pigments such as strontium oxide aluminate phosphorescent pigments as well as thermochromic pigments, commonly used in like products and commercially available, such as F D & C Blue 0 powder, F D & C Blue 1 powder commercially available from Sun Chemical Corporation.

Finally, the compositions of the present invention include water in an amount of from 10 - 90% by weight with respect to the total weight of the composition.

The method of manufacturing the compositions of the present invention contemplates dissolving the thickeners in hot water at about 70°C for the required time to form an homogeneous dissolution. Then let the mixture cool down to room temperature and mix with the moisturizers in a sigma mixer. Sodium borate and/or preservatives are dissolved in water and mixed with the solution containing dissolved thickeners at room temperature. Pigments and other additives are dissolved in a separate container and mixed with the antimicrobial combination of ingredients, which are finally added to the main mixture. All ingredients are finally mixed together until the compound becomes the compositions of the present invention with the desired consistencies.

Hereinafter, the present invention will be described in more detail with reference to specific examples. However, these examples are only for illustrating the present invention in more detail, the scope of the present invention is therefore not limited by these examples.

### EXAMPLES

### Example 1: Manufacturing of Gel-based composition

Use over 70 degree Celsius hot water to dissolve the hydroxypropyl guar. Let the guar gum liquid to cool down to room temperature and mix with propylene glycol in sigma mixer. Use hot water to dissolve sodium borate and let it cool down. Let the borax liquid cool down and then add the preservatives, iodopropynl butylcarbonate, 2-phenoxyethanol and diazolidinyl urea. Use water to dissolve pigment and add the combination of antimicrobials, silver ion and benzalkonium chloride. Mix all ingredients together into the mixer and stir until the compound becomes gel-liked form and nonsticky.

### Example 2: Formulation for a gel-based composition

A gel-based composition was prepared according to the method of Example 1 containing the following ingredients (in % by weight with respect to the total composition):

| **Ingredients** | **Function** | **% by weight** |
|---|---|---|
| Hydroxypropyl Guar | thickener | 1,700 |
| Sodium Borate (Na₂B₄O₇) | cross-linking agent | 0,090 |
| Propylene glycol | moisturizer | 9,500 |
| lodopropynyl Butylcarbamate | preservative | 0,060 |
| 2-Phenoxyethanol | fixative | 0,200 |
| Diazolidinyl Urea | preservative | 0,070 |
| Silver Solution - C | antimicrobial | 1,000 |
| Benzalkonium chloride | antimicrobial | 0,015 |
| FD&C Blue O Powder | pigment | 0,035 |
| Aqua | solvent | 87,330 |
| | | **100,000** |

### Example 3: Formulation for a play dough composition

A play dough composition was prepared according to the method of Example 1 containing the following ingredients (in % by weight with respect to the total composition):

| **Ingredients** | **Function** | **% by weight** |
|---|---|---|
| Whole Wheat Flour | thickener | 60,00 |
| Polyvinyl alcohol | thickener | 3,00 |
| Glycerol | moisturizer | 8,50 |
| White mineral oil | moisturizer | 9,00 |
| Ethylene glycol monophenyl ether | preservative | 0,60 |
| lodopropynyl Butylcarbamate | preservative | 0,09 |
| Octane-1,2-diol | preservative | 0,30 |
| Pentylene glycol | skin conditioning | 0,30 |
| Silver Solution - C | antimicrobial | 0,50 |
| Benzalkonium chloride | antimicrobial | 0,06 |
| Aqua | solvent | 17,65 |
| | | **100,00** |

### Example 4: Antimicrobial activity test of the composition of example 2

For the purpose of evaluating the antimicrobial activity of the flexible play compositions of the present invention, formulation of example 2 was subject to a testing according to European Standard BS EN 1276:2019 published on August 14, 2019, for Chemical disinfectants and antiseptics - Quantitative suspension test for the evaluation of bactericidal activity of chemical disinfectants and antiseptics used in food, industrial, domestic and institutional areas - Test method and requirements (phase 2, step 1).

### Sample description:

Item Name: Composition of example 2, brand name Dr.SLIME^{®}
Test Sample Quantity : 800g (Sanitize slime excludes thickeners).
Refer Sample Quantity : 500g (Sanitize slime).

### Quantitative suspension test for evaluation of bactericidal activity of chemical disinfectants and antiseptics

With reference to BS EN 1276:2019
Dilution recommended for use: No dilution
Product test concentration: 80% w/w
Active ingredient in product: Silver Solution-C/ Benzalkonium chloride
Appearance: Transparent liquid
Contact time: 60s±5s
Test temperature: (20±1)°C
Interfering substance: 0.3g/L bovine albumin (clean condition)
Inhibition method: Dilution-neutralization
Neutralizing solution: D/E neutralizing broth
Incubation: (37±1)°C, 48 hours
Agar medium: Trypticase Soy Agar
Test culture: *Escherichia coli* K12 (NCTC 10538)
*Pseudomonas aeruginosa* (ATCC 15442)
*Staphylococcus aureus* (ATCC 6538)
*Enterococcus hirae* (ATCC 10541)

### Controls & validation:

| Test m icroorga nism | Validation suspension (cfu/ml) Nv Nv₀=1/10Nv **Criteria: 300 *≤* :Nv *≤* 1600** | Experimental conditions control (cfu/ml) A **Criteria: A *≥*0.5 Nvₒ** | Neutralizer control (cfu/ml) B **Criteria: B *≥*0.5 Nv₀** | Method validation (cfu/ml) C **Criteria: C *≥*0.5 Nv₀** | Validity |
|---|---|---|---|---|---|
| Escherichia coli K12 (NCTC 10538) | 680 | 63 | 62 | 56 | Valid |
| Pseudomonas aeruginosa (ATCC 15442) | 710 | 53 | 58 | 60 | Valid |
| Staphylococcus aureus (ATCC 6538) | 680 | 54 | 63 | 70 | Valid |
| Enterococcus hirae (ATCC 10541) | 560 | 59 | 54 | 61 | Valid |

### Results:

| Test microorganism | Initial suspension(N) (cfu/ml) N₀=1/10N **Criteria: 1.5×10⁸≤N≤5.0×10⁸** | Final count (cfu/ml) **Na** | R(Log₁₀ Reduction) =Log N₀-Log **Na Criteria: R≥5.0** | %Reduction **Criteria: ≥99.999** | Assessm ent |
|---|---|---|---|---|---|
| Escherichia coli K12 (NCTC 10538) | 2.1×10⁸ | <140 | >5.0 | >99.999 | Meet |
| Pseudomonas aeruginosa (ATCC 15442) | 1.5x10⁸ | <140 | >5.0 | >99.999 | Meet |
| Staphylococcus aureus (ATCC 6538) | 2.1x90⁸ | <140 | >5.0 | >99.999 | Meet |
| Enterococcus hirae (ATCC 10541) | 2.3×10⁸ | <140 | >5.0 | >99.999 | Meet |

| | | | | | |
|---|---|---|---|---|---|
| N = Test suspension, Number of cells per ml in bacterial suspensions. No = (N₀=1/10N),Number of cells per ml in the test mixtures at the beginning of the contact time (time 0). Na = Number of survivors per ml in the test mixtures at the end of the contact time. Nv = Validation suspension, Number of cells per ml in bacterial suspensions. Nv₀= (Nvo =1/1 0Nv),Number of cells per ml in the test mixtures at the beginning of the contact time (time 0). A,B,C = Represent the different control test mixtures, A(experimental conditions control), B(Neutralizer control), C(Method validation) | | | | | |

### Example 5: Antimicrobial activity test of the composition of example 3

For the purpose of evaluating the antimicrobial activity of the flexible play compositions of the present invention, formulation of example 3 was subject to the same testing as in previous example 4, according to European Standard BS EN 1276:2019 published on August 14, 2019, for Chemical disinfectants and antiseptics - Quantitative suspension test for the evaluation of bactericidal activity of chemical disinfectants and antiseptics used in food, industrial, domestic and institutional areas - Test method and requirements (phase 2, step 1).

The results obtained correspond exactly with the results obtained in previous example 4 as follows.

### Results:

| Test microorganism | Initial suspension(N) (cfu/ml) N₀=1/10N **Criteria: 1.5×10⁸≤5N≤5.0×10⁸** | Final count (cfu/ml) **Na** | R(Log₁₀ Reduction) =Log N₀-Log Na **Criteria: R≥ 5.0** | %Reduction **Criteria: ≥99.999** | Assessment |
|---|---|---|---|---|---|
| Escherichia coli K12 (NCTC 10538) | 2.1×10⁸ | <140 | >5.0 | >99.999 | Meet |
| Pseudomonas aeruginosa (ATCC 15442) | 1.5×10⁸ | <140 | >5.0 | >99.999 | Meet |
| Staphylococcus aureus (ATCC 6538) | 2.1×10⁸ | <140 | >5.0 | >99.999 | Meet |
| Enterococcus hirae (ATCC 10541) | 2.3×10⁸ | <140 | >5.0 | >99.999 | Meet |

| | | | | | |
|---|---|---|---|---|---|
| N = Test suspension, Number of cells per ml in bacterial suspensions. No = (N₀=1/10N),Number of cells per ml in the test mixtures at the beginning of the contact time (time 0). Na = Number of survivors per ml in the test mixtures at the end of the contact time. Nv = Validation suspension, Number of cells per ml in bacterial suspensions. Nv₀= (Nvo =1/1 0Nv),Number of cells per ml in the test mixtures at the beginning of the contact time (time 0). A,B,C = Represent the different control test mixtures, A(experimental conditions control), B(Neutralizer control), C(Method validation) | | | | | |

## Claims

1. A flexible water based play composition having antimicrobial properties comprising a thickener, preservatives, water and a combination of antimicrobial agents selected from the group consisting of silver ions and benzalkonium chloride.

2. A flexible water based play composition having antimicrobial properties according to claim 1, **characterized in that** silver ions and benzalkonium chloride is present in the composition in an amount of from 0.15 - 1.5% by weight with respect to the total weight of the composition.

3. A flexible water based play composition having antimicrobial properties according to any of claims 1 to 2, **characterized in that** silver ions are present in the composition in an amount of from 0.15 - 1.0% by weight with respect to the total weight of the composition.

4. A flexible water based play composition having antimicrobial properties according to any of claims 1 to 3, **characterized in that** benzalkonium chloride are present in the composition in an amount of from 0,015 - 0,06% by weight with respect to the total weight of the composition.

5. A flexible water based play composition having antimicrobial properties according to any of claims 1 to 4, **characterized in that** the thickener is guar gum or derivatives thereof selected from the group consisting of: hydroxypropyl guar (HPG), carboxymethyl guar (CMG) and carboxymethyl hydroxypropyl guar (Carboxymethyl 2-Hydroxypropyl Ether) (CMHPG).

6. A flexible water based play composition having antimicrobial properties according to claim 5, **characterized in that** guar gum or derivatives thereof is present in the composition in an amount of from 1 to 2% by weight with respect to the total weight of the composition.

7. A flexible water based play composition having antimicrobial properties according to any of claims 1 to 4, **characterized in that** the thickener is selected from the group consisting of wheat flour, cornstarch, polyvinyl alcohol and mixtures thereof.

8. A flexible water based play composition having antimicrobial properties according to claim 7, **characterized in that** wheat flour or cornstarch is present in the composition in an amount of from 40 to 80% by weight with respect to the total weight of the composition.

9. A flexible water based play composition having antimicrobial properties according to claim 8, **characterized in that** polyvinyl alcohol is present in the composition in an amount of from 1 to 10% by weight with respect to the total weight of the composition.

10. A flexible water based play composition having antimicrobial properties according to any of claims 1 to 9, additionally comprising borax in an amount of from 0,05 to 0,15% by weight with respect to the total weight of the composition.

11. A flexible water based play composition having antimicrobial properties according to any of claims 1 to 10, **characterized in that** the preservatives present in the composition are selected from the group consisting of: ethylene glycol monophenyl ether, 2-phenoxyethanol, iodopropynyl butylcarbamate, DMDMH and mixtures thereof.

12. A flexible water based play composition having antimicrobial properties according to claim 11, **characterized in that** the preservatives are present in the composition in an amount of from 0,01 to 0,10% by weight with respect to the total weight of the composition.

13. A flexible water based play composition having antimicrobial properties according to any of claims 1 to 12, **characterized in that** water is present in the composition in an amount of from 10 to 90% by weight with respect to the total weight of the composition.

14. A flexible water based play composition having antimicrobial properties according to any of claims 1 to 13, additionally comprising humectants, moisturizers, skin conditioning agents, pigments, colorants, dyes and/or fragrances.

15. A flexible water based play composition having antimicrobial properties according to claims 1 to 6 and 10 to 14 comprising ( in % by weight with respect to the total weight of the composition):
| **Ingredients** | **% by weight** |
|---|---|
| Hydroxypropyl Guar | 1,700 |
| Sodium Borate (Na₂B₄O₇) | 0,090 |
| Propylene glycol | 9,500 |
| Iodopropynyl Butylcarbamate | 0,060 |
| 2-Phenoxyethanol | 0,200 |
| Diazolidinyl Urea | 0,070 |
| Silver Solution - C | 1,000 |
| Benzalkonium chloride | 0,015 |
| FD&C Blue O Powder | 0,035 |
| Aqua | 87,280 |
| | **100,000** |

16. A flexible water based play composition having antimicrobial properties according to claims 1 to 4 and 7 to 14 comprising (in % by weight with respect to the total weight of the composition):
| **Ingredients** | **% by weight** |
|---|---|
| Whole Wheat Flour | 60,00 |
| Polyvinyl alcohol | 3,00 |
| Glycerol | 8,50 |
| White mineral oil | 9,00 |
| Ethylene glycol monophenyl ether | 0,60 |
| Iodopropynyl Butylcarbamate | 0,09 |
| Octane-1,2-diol | 0,30 |
| Pentylene glycol | 0,30 |
| Silver Solution - C | 0,50 |
| Benzalkonium chloride | 0,06 |
| Aqua | 17,65 |
| | **100,00** |

## Patentansprüche

1. Flexible Spielzusammensetzung auf Wasserbasis mit antimikrobiellen Eigenschaften, umfassend ein Verdickungsmittel, Konservierungsmittel, Wasser und eine Kombination von antimikrobiellen Mitteln, ausgewählt aus der Gruppe, bestehend aus Silberionen und Benzalkoniumchlorid.

2. Flexible Spielzusammensetzung auf Wasserbasis mit antimikrobiellen Eigenschaften nach Anspruch 1, **dadurch gekennzeichnet, dass** Silberionen und Benzalkoniumchlorid in der Zusammensetzung in einer Menge von 0,15-1,5 Gew.-%, bezogen auf das Gesamtgewicht der Zusammensetzung, vorhanden sind.

3. Flexible Spielzusammensetzung auf Wasserbasis mit antimikrobiellen Eigenschaften nach einem der Ansprüche 1 bis 2, **dadurch gekennzeichnet, dass** Silberionen in der Zusammensetzung in einer Menge von 0,15-1,0 Gew.-%, bezogen auf das Gesamtgewicht der Zusammensetzung, vorhanden sind.

4. Flexible Spielzusammensetzung auf Wasserbasis mit antimikrobiellen Eigenschaften nach einem der Ansprüche 1 bis 3, **dadurch gekennzeichnet, dass** Benzalkoniumchlorid in der Zusammensetzung in einer Menge von 0,015-0,06 Gew.-%, bezogen auf das Gesamtgewicht der Zusammensetzung, vorhanden ist.

5. Flexible Spielzusammensetzung auf Wasserbasis mit antimikrobiellen Eigenschaften nach einem der Ansprüche 1 bis 4, **dadurch gekennzeichnet, dass** das Verdickungsmittel Guargummi oder Derivate davon ist, ausgewählt aus der Gruppe, bestehend aus: Hydroxypropylguar (HPG), Carboxymethylguar (CMG) und Carboxymethylhydroxypropylguar (Carboxymethyl-2-hydroxypropylether) (CMHPG).

6. Flexible Spielzusammensetzung auf Wasserbasis mit antimikrobiellen Eigenschaften nach Anspruch 5, **dadurch gekennzeichnet, dass** Guargummi oder Derivate davon in der Zusammensetzung in einer Menge von 1 bis 2 Gew.-%, bezogen auf das Gesamtgewicht der Zusammensetzung, vorhanden sind.

7. Flexible Spielzusammensetzung auf Wasserbasis mit antimikrobiellen Eigenschaften nach einem der Ansprüche 1 bis 4, **dadurch gekennzeichnet, dass** das Verdickungsmittel ausgewählt ist aus der Gruppe, bestehend aus Weizenmehl, Maisstärke, Polyvinylalkohol und Mischungen davon.

8. Flexible Spielzusammensetzung auf Wasserbasis mit antimikrobiellen Eigenschaften nach Anspruch 7, **dadurch gekennzeichnet, dass** Weizenmehl oder Maisstärke in der Zusammensetzung in einer Menge von 40 bis 80 Gew.-%, bezogen auf das Gesamtgewicht der Zusammensetzung, vorhanden ist.

9. Flexible Spielzusammensetzung auf Wasserbasis mit antimikrobiellen Eigenschaften nach Anspruch 8, **dadurch gekennzeichnet, dass** Polyvinylalkohol in der Zusammensetzung in einer Menge von 1 bis 10 Gew.-%, bezogen auf das Gesamtgewicht der Zusammensetzung, vorhanden ist.

10. Flexible Spielzusammensetzung auf Wasserbasis mit antimikrobiellen Eigenschaften nach einem der Ansprüche 1 bis 9, zusätzlich umfassend Borax in einer Menge von 0,05 bis 0,15 Gew.-%, bezogen auf das Gesamtgewicht der Zusammensetzung.

11. Flexible Spielzusammensetzung auf Wasserbasis mit antimikrobiellen Eigenschaften nach einem der Ansprüche 1 bis 10, **dadurch gekennzeichnet, dass** die in der Zusammensetzung vorhandenen Konservierungsmittel ausgewählt sind aus der Gruppe, bestehend aus: Ethylenglycolmonophenylether, 2-Phenoxyethanol, Iodpropinylbutylcarbamat, DMDMH und Mischungen davon.

12. Flexible Spielzusammensetzung auf Wasserbasis mit antimikrobiellen Eigenschaften nach Anspruch 11, **dadurch gekennzeichnet, dass** die Konservierungsmittel in der Zusammensetzung in einer Menge von 0,01 bis 0,10 Gew.-%, bezogen auf das Gesamtgewicht der Zusammensetzung, vorhanden sind.

13. Flexible Spielzusammensetzung auf Wasserbasis mit antimikrobiellen Eigenschaften nach einem der Ansprüche 1 bis 12, **dadurch gekennzeichnet, dass** Wasser in der Zusammensetzung in einer Menge von 10 bis 90 Gew.-%, bezogen auf das Gesamtgewicht der Zusammensetzung, vorhanden ist.

14. Flexible Spielzusammensetzung auf Wasserbasis mit antimikrobiellen Eigenschaften nach einem der Ansprüche 1 bis 13, zusätzlich umfassend Feuchthaltemittel, Feuchtigkeitscremes, Hautpflegemittel, Pigmente, Farbstoffe, Färbemittel und/oder Duftstoffe.

15. Flexible Spielzusammensetzung auf Wasserbasis mit antimikrobiellen Eigenschaften nach den Ansprüchen 1 bis 6 und 10 bis 14, umfassend (in Gew.-%, bezogen auf das Gesamtgewicht der Zusammensetzung):
| **Inhaltsstoffe** | **Gew.-%** |
|---|---|
| Hydroxypropylguar | 1,700 |
| Natriumborat (Na₂B₄O₇) | 0,090 |
| Propylenglykol | 9,500 |
| Lodopropinylbutylcarbamat | 0,060 |
| 2-Phenoxyethanol | 0,200 |
| Diazolidinylharnstoff | 0,070 |
| Silberlösung - C | 1,000 |
| Benzalkoniumchlorid | 0,015 |
| FD&C Blue O-Pulver | 0,035 |
| Aqua | 87,280 |
| | **1 00,000** |

16. Flexible Spielzusammensetzung auf Wasserbasis mit antimikrobiellen Eigenschaften nach den Ansprüchen 1 bis 4 und 7 bis 14, umfassend (in Gew.-%, bezogen auf das Gesamtgewicht der Zusammensetzung):
| **Inhaltsstoffe** | **Gew.-%** |
|---|---|
| Vollkornmehl | 60,00 |
| Polyvinylalkohol | 3,00 |
| Glycerin | 8,50 |
| Weißes Mineralöl | 9,00 |
| Ethylenglycolmonophenylether | 0,60 |
| Lodopropinylbutylcarbamat | 0,09 |
| Octan-1,2-diol | 0,30 |
| Pentylenglykol | 0,30 |
| Silberlösung - C | 0,50 |
| Benzalkoniumchlorid | 0,06 |
| Aqua | 17,65 |
| | **100,00** |

## Revendications

1. Composition de jeu souple à base d'eau ayant des propriétés antimicrobiennes comprenant un épaississant, des conservateurs, de l'eau et une combinaison d'agents antimicrobiens choisis dans le groupe constitué par les ions argent et le chlorure de benzalkonium.

2. Composition de jeu souple à base d'eau ayant des propriétés antimicrobiennes selon la revendication 1, **caractérisée en ce que** des ions argent et du chlorure de benzalkonium sont présents dans la composition en une quantité de 0,15 à 1,5 % en poids par rapport au poids total de la composition.

3. Composition de jeu souple à base d'eau ayant des propriétés antimicrobiennes selon l'une quelconque des revendications 1 à 2, **caractérisée en ce que** des ions argent sont présents dans la composition en une quantité de 0,15 à 1,0 % en poids par rapport au poids total de la composition.

4. Composition de jeu souple à base d'eau ayant des propriétés antimicrobiennes selon l'une quelconque des revendications 1 à 3, **caractérisée en ce que** le chlorure de benzalkonium est présent dans la composition en une quantité de 0,015 à 0,06 % en poids par rapport au poids total de la composition.

5. Composition de jeu souple à base d'eau ayant des propriétés antimicrobiennes selon l'une quelconque des revendications 1 à 4, **caractérisée en ce que** l'épaississant est la gomme de guar ou des dérivés de celle-ci choisis dans le groupe constitué par : l'hydroxypropylguar (HPG), le carboxyméthylguar (CMG) et le carboxyméthylhydroxypropylguar (éther carboxyméthylique 2-hydroxypropylique) (CMHPG).

6. Composition de jeu souple à base d'eau ayant des propriétés antimicrobiennes selon la revendication 5, **caractérisée en ce que** la gomme de guar ou les dérivés de celle-ci est présente dans la composition en une quantité de 1 à 2 % en poids par rapport au poids total de la composition.

7. Composition de jeu souple à base d'eau ayant des propriétés antimicrobiennes selon l'une quelconque des revendications 1 à 4, **caractérisée en ce que** l'épaississant est choisi dans le groupe constitué par la farine de blé, la fécule de maïs, un alcool polyvinylique et des mélanges de ceux-ci.

8. Composition de jeu souple à base d'eau ayant des propriétés antimicrobiennes selon la revendication 7, **caractérisée en ce que** la farine de blé ou l'amidon de maïs est présent(e) dans la composition en une quantité de 40 à 80 % en poids par rapport au poids total de la composition.

9. Composition de jeu souple à base d'eau ayant des propriétés antimicrobiennes selon la revendication 8, **caractérisée en ce que** l'alcool polyvinylique est présent dans la composition en une quantité de 1 à 10 % en poids par rapport au poids total de la composition.

10. Composition de jeu souple à base d'eau ayant des propriétés antimicrobiennes selon l'une quelconque des revendications 1 à 9, comprenant en outre du borax en une quantité de 0,05 à 0,15 % en poids par rapport au poids total de la composition.

11. Composition de jeu souple à base d'eau ayant des propriétés antimicrobiennes selon l'une quelconque des revendications 1 à 10, **caractérisée en ce que** les conservateurs présents dans la composition sont choisis dans le groupe constitué par : l'éther monophénylique d'éthylène glycol, le 2-phénoxyéthanol, le butylcarbamate d'iodopropynyle, le DMDMH et des mélanges de ceux-ci.

12. Composition de jeu souple à base d'eau ayant des propriétés antimicrobiennes selon la revendication 11, **caractérisée en ce que** les conservateurs sont présents dans la composition en une quantité de 0,01 à 0,10 % en poids par rapport au poids total de la composition.

13. Composition de jeu souple à base d'eau ayant des propriétés antimicrobiennes selon l'une quelconque des revendications 1 à 12, **caractérisée en ce que** l'eau est présente dans la composition en une quantité de 10 à 90 % en poids par rapport au poids total de la composition.

14. Composition de jeu souple à base d'eau ayant des propriétés antimicrobiennes selon l'une quelconque des revendications 1 à 13, comprenant en outre des humectants, des crèmes hydratantes, des agents revitalisants pour la peau, des pigments, des colorants, des teintures et/ou des parfums.

15. Composition de jeu souple à base d'eau ayant des propriétés antimicrobiennes selon les revendications 1 à 6 et 10 à 14 comprenant (en % en poids par rapport au poids total de la composition) :
| **Ingrédients** | **% en poids** |
|---|---|
| Hydroxypropylquar | 1,700 |
| Borate de sodium (Na₂B₄O₇) | 0,090 |
| Propylène glycol | 9,500 |
| Butylcarbamate d'iodopropynyle | 0,060 |
| 2-Phénoxyéthanol | 0,200 |
| Diazolidinylurée | 0,070 |
| Solution d'argent - C | 1,000 |
| Chlorure de benzalkonium | 0,015 |
| FD&C Bleu Poudre O | 0,035 |
| Eau | 87,280 |
| | **1 00,000** |

16. Composition de jeu souple à base d'eau ayant des propriétés antimicrobiennes selon les revendications 1 à 4 et 7 à 14 comprenant (en % en poids par rapport au poids total de la composition) :
| **Ingrédients** | **% en poids** |
|---|---|
| Farine de blé entier | 60,00 |
| Alcool polyvinylique | 3,00 |
| Glycérol | 8,50 |
| Huile minérale blanche | 9,00 |
| Éther monophénylique d'éthylène glycol | 0,60 |
| Butylcarbamate d'iodopropynyle | 0,09 |
| Octane-1,2-diol | 0,30 |
| Pentylène glycol | 0,30 |
| Solution d'argent - C | 0,50 |
| Chlorure de benzalkonium | 0,06 |
| Eau | 17,65 |
| | **100,00** |
